# FASCICULE DE BREVET EUROPEEN

(11) **EP 1 978 419 B1**
(45) Date de publication et mention de la délivrance du brevet: **21.07.2010**
(21) Numéro de dépôt: 07105670.9
(22) Date de dépôt: 04.04.2007
(51) Int. Cl.: G04B 11/00, G04B 27/04, F16H 1/00

(54) **Dispositif de remontage comprenant un accouplement à sens unique**
Aufzugsvorrichtung mit unidirektionale Kupplung
Winding device comprising a unidirectional coupling

(43) Date de publication de la demande: 08.10.2008
(73) Titulaire: ETA SA Manufacture Horlogère Suisse, 2540 Grenchen (CH)
(72) Inventeur: Chaignat, Julien, 2525 Le Landeron (CH); Bettelini, Marco, 2515, Prêles (CH)
(74) Mandataire: Ravenel, Thierry Gérard Louis

(56) Documents cités:
- US-A- 3 487 631
- US-A- 3 735 583
- US-A- 5 303 213

## Description

La présente invention se rapporte au domaine de l'horlogerie Elle concerne plus précisément un dispositif de remontage comprenant un accouplement à sens unique.

Les accouplements à sens unique sont utilisés, dans l'horlogerie, pour transmettre un mouvement de rotation dans un sens seulement. Ils comprennent classiquement deux organes de transmissions, l'un menant, l'autre mené, qui se solidarisent dans un sens de rotation et se désolidarisent dans l'autre. De nombreux accouplements à sens unique sont connus de l'homme de métier, essentiellement entre deux organes de transmission d'axes de rotation parallèles ou coaxiaux. On se réfèrera pour plus d'information sur ce type d'accouplements, aux brevets CH 347 139, CH 493 874, FR 1 491 183 et US 3 7 35 583.

On connaît, par ailleurs, des accouplements à sens unique destinés à transmettre un mouvement de rotation entre deux organes de transmission d'axes perpendiculaires concourants. Un exemple bien connu de l'homme de métier est l'accouplement à denture Breguet, formé de deux pignons comportant chacun une denture de chant en scie, coopérant ensemble de manière à engrener dans un sens de rotation, et à se désolidariser dans l'autre sens de rotation. Les deux pignons sont coaxiaux, mais, en pratique, la finalité de cet accouplement est bien de transmettre un mouvement de rotation à une roue d'axe perpendiculaire à celui des pignons. A cet effet, le pignon mené comporte généralement une denture radiale droite, en prise avec ladite roue.

Ce type d'accouplement est certes d'une grande efficacité, mais il est complexe et coûteux. En particulier le pignon mené comportant une denture Breguet et une denture droite, est une pièce compliquée, de fabrication délicate.

On notera que cet accouplement est employé principalement dans un dispositif de remontage du barillet, afin d'éviter d'actionner le barillet dans le sens contraire au remontage. A cet effet, le dispositif de remontage comporte classiquement un pignon coulant muni d'une première denture Breguet, mobile entre une position de mise à l'heure et une position de remontage, et un pignon de remontoir muni d'une deuxième denture Breguet, en prise avec le pignon coulant en position de remontage, et formant avec lui, un accouplement à sens unique. Le pignon de remontoir est, en outre, doté d'une denture radiale droite engrenant avec une roue de couronne, elle-même en prise avec un rochet monté sur un barillet. Lorsque le pignon coulant tourne dans un premier sens de rotation, il engrène avec le pignon de remontoir, qui entraîne la roue de couronne. Celle-ci entraîne à son tour le rochet, et le barillet est remonté. Lorsque le pignon coulant tourne dans un deuxième sens de rotation, il se désolidarise du pignon de remontoir, qui n'est ainsi pas entraîné en rotation, évitant ainsi une mauvaise manipulation du barillet.

Le document US3487631 concerne un mécanisme de correction d'un affichage de la date, comprenant un accouplement à sens unique vers l'anneau périphérique d'indication de la date. Il n'est toutefois pas adapté au remontage d'un barillet.

Le but de l'invention est de proposer un dispositif de remontage d'un barillet comprenant un nouvel accouplement à sens unique, destiné à transmettre un mouvement de rotation d'un premier organe de transmission à un deuxième organe de transmission d'axe perpendiculaire à celui du premier organe. Cet accouplement est de conception et de fabrication simplifiée par rapport à l'accouplement de type Breguet.

L'invention concerne un dispositif de remontage d'un barillet comprenant un pignon monté sur une tige de remontoir d'axe de rotation XX, muni d'une première denture de chant en scie, mobile entre une première position de mise à l'heure et une deuxième position de remontage et positionné axialement dans la position de remontage (B) par un organe élastique, **caractérisé en ce que** le dispositif comporte encore une roue de couronne d'axe de rotation YY perpendiculaire à XX, munie d'une denture intérieure en scie en prise avec la première denture de chant en scie dans la deuxième position de remontage de manière à former un accouplement à sens unique.

Grâce à la denture intérieure en scie de la roue de couronne, le pignon est directement en prise avec la roue de couronne, sans l'intermédiaire d'un pignon de remontoir. Le dispositif de remontage s'en trouve considérablement simplifié.

D'autres caractéristiques et avantages de la présente invention ressortiront plus clairement de la description détaillée qui suit d'un exemple de réalisation d'un accouplement et d'un dispositif de remontage d'un barillet selon l'invention, ces exemples étant donnés à titre purement illustratif et non limitatif seulement, en liaison avec le dessin annexé sur lequel :
- la figure 1 est une vue en perspective d'un accouplement selon l'invention, et
- les figures 2 et 3 sont des vues respectivement en perspective et en coupe d'un dispositif de remontage d'un barillet selon l'invention.

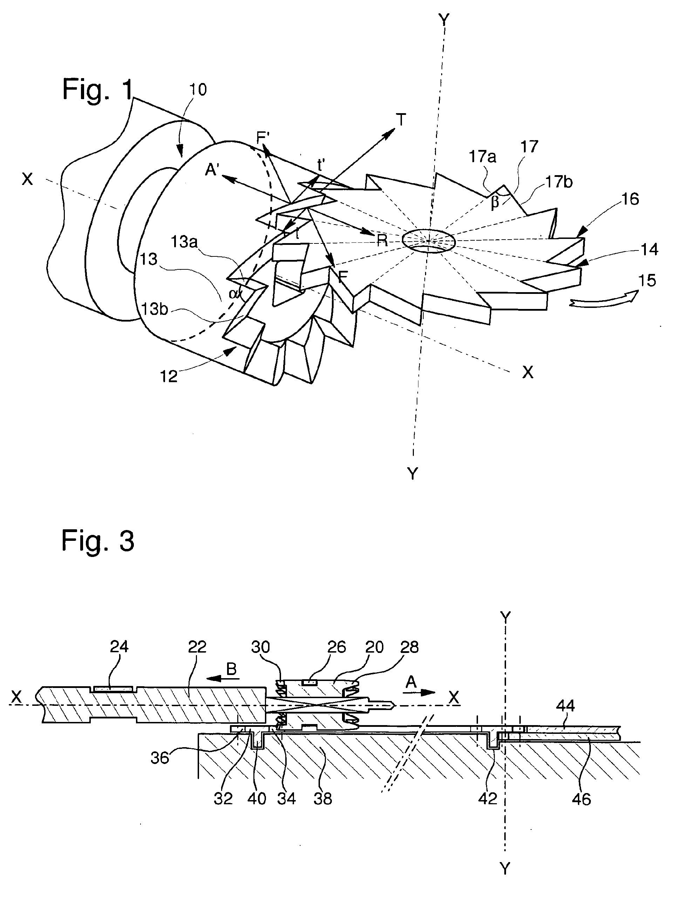

L'accouplement illustré en figure 1, comprend un pignon 10 muni d'une denture Breguet 12, mobile en rotation autour d'un axe XX. Le pignon 10 est, par exemple, un pignon coulant, ou tout autre pignon pour mouvement d'horlogerie. La denture Breguet 12 est bien connue de l'homme de métier : Il s'agit d'une denture taillée axialement, ou denture de chant, en scie. Chaque dent 13 comporte un flanc droit 13a sensiblement parallèle à l'axe XX du pignon 10, et un flanc oblique 13b formant un angle α avec le flanc droit 13a.

Le pignon 10 est monté sur un arbre, fixe ou coulant, par exemple sur une tige de remontoir. Dans les deux cas, il est maintenu dans sa position axiale par un organe élastique non représenté, de manière à pouvoir effectuer de légers déplacements axiaux, et revenir dans sa position.

Le pignon 10 est en prise avec une roue 14 formant typiquement le premier élément d'un rouage horloger ou d'un dispositif de correction, symbolisés par la référence 15. Le rouage ou le dispositif de correction 15 sont formés de différents éléments non représentés, et sont caractérisés par leur force de frottement et, le cas échéant, la force de positionnement de l'un des éléments par un organe de positionnement.

La roue 14 est mobile en rotation autour d'un axe YY. Elle est munie d'une denture en scie 16, formée de dents 17 comportant un flanc droit 17a sensiblement radial, et un flanc oblique 17b formant un angle β avec le flanc droit 17a. Les dentures 12 et 16 sont formées et dimensionnées pour pouvoir engrener l'une avec l'autre. En particulier, les angles α et β sont sensiblement égaux. De plus, selon l'invention, les axes XX et YY sont perpendiculaires. Avantageusement, les axes XX et YY sont concourants.

Lorsque le pignon 10 est menant dans un premier sens de rotation horaire, les flancs droits 13a et 17a coopèrent de manière à transmettre à la roue 14 une force sensiblement tangentielle T. Si la force T est supérieure aux forces de frottement et de positionnement du rouage ou du dispositif de correction 15, la roue 14 est entraînée en rotation, et le mouvement de rotation est transmis du pignon 10 à la roue 14.

Lorsque le pignon 10 est menant dans un deuxième sens de rotation horaire, les flancs 13b et 17b coopèrent de sorte qu'une force F, comportant une composante radiale R et tangentielle t, est appliquée à la roue 14. En réaction, une force F' opposée à F, d'intensité dépendant des forces de frottement et de positionnement du rouage ou du dispositif de correction 15, est appliquée au pignon 10. La force F' comporte une composante axiale A' et une composante tangentielle t', Les composantes axiale A' et radiale R sont d'autant plus importantes que les angles α et β sont grands. Si la composante tangentielle t est inférieure aux forces de frottement ou de positionnement du rouage 15 et que la force axiale A' est supérieure à la force de positionnement axiale du pignon 10 due à l'organe élastique, le pignon 10 se déplace légèrement sur son axe XX, et la roue 14 n'est pas entraînée en rotation.

L'ensemble pignon 10 - roue 14 ainsi décrit forme donc un accouplement à sens unique, pour la transmission d'un mouvement de rotation d'un axe XX à un axe YY perpendiculaire à l'axe XX.

On notera que, dans le mode de réalisation décrit, le pignon 10 est menant, et la roue 14 est menée. Inversement, la roue 14 peut être menante et le pignon 10 mené. Le jeu des forces est identique, et produit un résultat symétrique : le pignon 10 est entraîné en rotation dans un sens de rotation de la roue 14, et se déplace axialement dans l'autre sens de rotation.

On notera par ailleurs, que, dans une variante du mode de réalisation décrit, la roue 14 peut être remplacée par une couronne à denture intérieure. Le fonctionnement de l'accouplement en est inchangé.

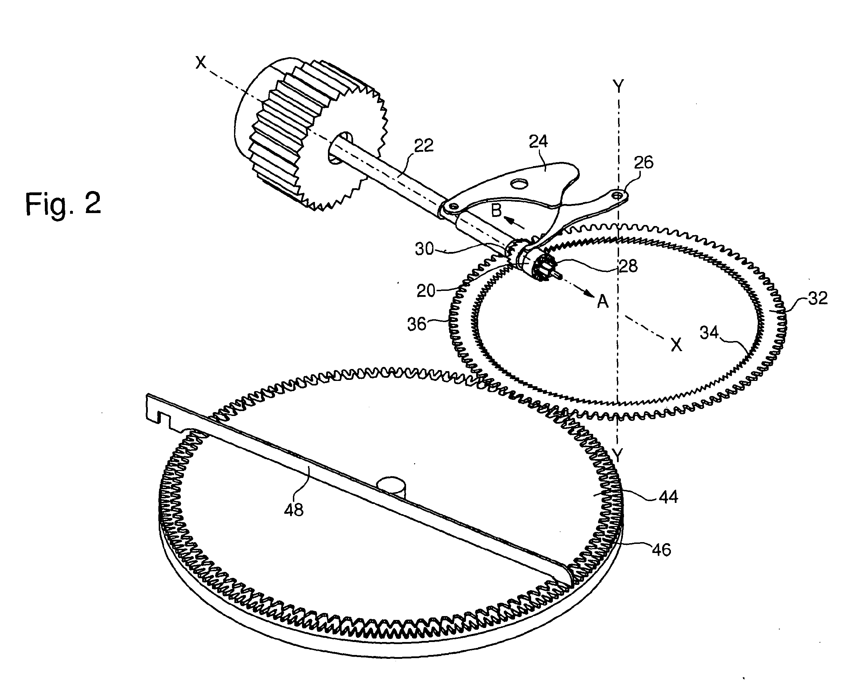

On se réfèrera maintenant aux figures 2 et 3 qui illustrent schématiquement un dispositif de remontage d'un barillet utilisant l'accouplement à sens unique selon l'invention.

Le dispositif de remontage selon l'invention comporte classiquement un pignon coulant 20, monté coulissant sur une tige de remontoir 22 entre une position de mise à l'heure A et une position de remontage B. Le basculement entre la position de mise à l'heure A et de remontage B se fait classiquement à l'aide d'un mécanisme composé d'une tirette 24 et d'une bascule 26.

Le pignon coulant 20 est monté solidaire en rotation sur la tige de remontoir 22 d'axe de rotation XX. Il comporte une première denture de chant droite 28 et une deuxième denture de chant en scie 30. En position de mise à l'heure A, la première denture de chant 28 coopère avec une roue de renvoi non représentée, en prise avec un deuxième renvoi, lui-même en prise avec une roue de minuterie. Cet agencement est bien connu de l'homme de métier, et ne sera pas décrit davantage.

Le dispositif de remontage comporte encore une roue de couronne 32 comportant une denture intérieure en scie 34, et une denture extérieure droite 36. La roue de couronne 32 est montée libre en rotation autour d'un axe YY perpendiculaire à l'axe XX, par exemple sur un pont de rouage 38. A cet effet, la roue de couronne 32 est munie d'une portion cylindrique protubérante 40 engagée dans une gorge circulaire 42 pratiquée dans le pont de rouage 38. La denture droite 36 engrène avec un rochet 44 monté sur un barillet 46. Le rochet 44 est maintenu fixe en rotation par un cliquet ressort 48. En variante de ce mode de réalisation, la roue de couronne est en prise indirecte avec le rochet 44, par l'intermédiaire du renvoi 50.

En position de remontage, le pignon coulant 20 coopère avec la denture intérieure 34 de la roue de couronne 32, et forme avec elle un accouplement à sens unique du type décrit précédemment. Dans un premier sens de rotation, la roue de couronne 32 est entraînée en rotation de manière à remonter le barillet 46. Dans un deuxième sens de rotation, les forces de frottement et de positionnement des différents éléments, ainsi que les angles des dentures 28 et 34, sont calculés de manière à ce que le pignon coulant 20 se déplace légèrement axialement, sans entraîner la roue de couronne 32.

Le mécanisme de remontage ainsi décrit ne comporte pas de pignon remontoir, pièce intermédiaire entre le pignon coulant 20 et la roue de couronne 32. Le pignon de remontoir est une pièce compliquée et coûteuse, et sa suppression représente un gain en encombrement et en complexité considérable.

Bien entendu, le dispositif de remontage selon l'invention ne se limite pas aux modes de réalisation qui viennent d'être décrits et diverses modifications et variantes simples peuvent être envisagées par l'homme du métier sans sortir du cadre de l'invention tel que défini par les revendications annexées.

## Revendications

1. Dispositif de remontage d'un barillet comprenant un pignon (20) monté sur une tige de remontoir (22) d'axe de rotation XX, muni d'une première denture de chant en scie (30), mobile entre une première position de mise à l'heure (A) et une deuxième position de remontage (B) et positionné axialement dans ladite position de remontage (B) par un organe élastique, **caractérisé en ce que** ledit dispositif comporte encore une roue de couronne (32) d'axe de rotation YY perpendiculaire à XX, munie d'une denture intérieure (34) en scie en prise avec ladite première denture de chant en scie (30) dans ladite deuxième position de remontage (B) de manière à former un accouplement à sens unique.

2. Dispositif de remontage selon la revendication 1, **caractérisée en ce que** ladite roue de couronne (32) comporte encore une denture extérieure (36) en prise au moins indirectement avec un rochet (46).

3. Dispositif de remontage selon l'une des revendications 1 ou 2, **caractérisé en ce que** ledit pignon (20) comporte, en outre, une deuxième denture de chant droite (28) coopérant avec un premier renvoi dans ladite première position (A), ledit premier renvoi étant relié cinématiquement à une roue de minuterie.

## Claims

1. Barrel winding device including a pinion (20) mounted on a winding stem (22) with an axis of rotation XX, fitted with a first saw-like contrate toothing (30), mobile between a first time-setting position (A) and a second winding position (B) and axially positioned in said winding position (B) by an elastic member, **characterized in that** said device further includes a crown wheel (32) whose axis of rotation YY is perpendicular to XX, fitted with a saw-like inner toothing (34) meshed with said first saw-like contrate toothing (30) in said second winding position (B) so as to form a single direction coupling device.

2. Winding device according to claim 1, **characterized in that** said crown wheel (32) further includes an external toothing (36) meshed at least indirectly with a ratchet (46).

3. Winding device according to claim 1 or 2, **characterized in that** said pinion (20) further includes a second straight contrate toothing (28) cooperating with a first intermediate wheel in said first position (A), said firstintermediate wheel being kinematically connected to a motion work wheel.

## Patentansprüche

1. Federhausaufzugsvorrichtung umfassend einen Kupplungstrieb (20), der auf einer Aufzugswelle (22) mit einer XX-Drehachse montiert ist, mit einer ersten Säge-Seitenzahnung (30) versehen ist, zwischen einer ersten Zeigerstellungsposition (A) und einer zweiten Aufzugsposition (B) beweglich ist, und axial in der besagten Aufzugsposition (B) durch ein elastisches Organ positioniert ist, **dadurch gekennzeichnet, dass** die besagte Vorrichtung ferner ein Kronenrad (32) umfasst, dessen Drehachse YY senkrecht zu XX ist, mit einer inneren Sägezahnung (34) versehen ist, die mit der besagten ersten Säge-Seitenzahnung (30) in der besagten zweiten Aufzugsposition (B) kämmt, um eine unidirektionale Kupplung zu bilden.

2. Federhausaufzugsvorrichtung gemäss Anspruch 1, **dadurch gekennzeichnet, dass** das besagte Kronenrad (32) ferner eine externe Zahnung (36) umfasst, die wenigstens indirekt mit einem Sperrrad (46) kämmt.

3. Federhausaufzugsvorrichtung gemäss Anspruch 1 oder 2,
**dadurch gekennzeichnet, dass** der besagte Kupplungstrieb (20) ferner eine zweite gerade Seitenzahnung (28) umfasst, die mit einem ersten Zwischenrad in der ersten besagten Position (A) zusammenarbeitet, wobei das erste Zwischenrad kinematisch mit einem Zeigerwerkrad verbunden ist.
